(19) Europäisches Patentamt / European Patent Office / Office européen des brevets

(11) **EP 2 884 071 B1**

(12) **EUROPEAN PATENT SPECIFICATION**

(45) Date of publication and mention
of the grant of the patent:
**12.10.2016 Bulletin 2016/41**

(21) Application number: **13827539.1**

(22) Date of filing: **09.08.2013**

(51) Int Cl.:
*F01N 3/24* (2006.01)    *B01D 53/86* (2006.01)
*C09K 5/08* (2006.01)    *F01N 3/20* (2006.01)
*F01N 5/02* (2006.01)    *F28D 20/00* (2006.01)
*F25B 17/08* (2006.01)    *F25B 30/04* (2006.01)
*B01D 53/90* (2006.01)    *B01D 53/94* (2006.01)
*F01N 13/00* (2010.01)

(86) International application number:
**PCT/JP2013/071687**

(87) International publication number:
**WO 2014/025024 (13.02.2014 Gazette 2014/07)**

(54) **CATALYTIC REACTOR AND VEHICLE EQUIPPED WITH SAID CATALYTIC REACTOR**

KATALYTISCHER REAKTOR UND FAHRZEUG MIT EINEM DERARTIGEN KATALYTISCHEN REAKTOR

RÉACTEUR CATALYTIQUE ET VÉHICULE ÉQUIPÉ DUDIT RÉACTEUR CATALYTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.08.2012 JP 2012177477
08.08.2013 JP 2013165453**

(43) Date of publication of application:
**17.06.2015 Bulletin 2015/25**

(73) Proprietor: **Kabushiki Kaisha Toyota Jidoshokki
Kariya-shi, Aichi 448-8671 (JP)**

(72) Inventors:
• SUZUKI, Junya
  Kariya-shi
  Aichi 448-8671 (JP)
• YAMASAKI, Takafumi
  Kariya-shi
  Aichi 448-8671 (JP)
• HARIU, Satoshi
  Kariya-shi
  Aichi 448-8671 (JP)
• YAMAUCHI, Takafumi
  Nagakute-shi
  Aichi 480-1192 (JP)
• HIROTA, Yasuki
  Nagakute-shi
  Aichi 480-1192 (JP)
• SHIMAZU, Takashi
  Nagakute-shi
  Aichi 480-1192 (JP)

(74) Representative: **TBK
Bavariaring 4-6
80336 München (DE)**

(56) References cited:
EP-A2- 1 387 133     EP-A2- 2 410 147
DE-A1-102004 052 107     JP-A- H02 230 067
JP-A- 2006 300 414     JP-A- 2010 223 575
JP-A- 2010 513 812     JP-A- 2011 058 678
JP-A- 2011 106 354     JP-A- 2012 026 447

**Description**

TECHNICAL FIELD

The present invention relates to a catalytic reactor utilizing a chemical heat storage material and a vehicle equipped with the catalytic reactor.

BACKGROUND ART

In recent years, the emission reduction of carbon dioxide as a part of the global environmental preservation has been strongly demanded, and studies on technologies of the energy saving and the promotion of exhaust heat utilization are being extensively made. As one example thereof, technologies of highly efficiently storing heat are being studied. One example of such technologies is chemical heat storage technologies having a large heat storage quantity per unit volume or unit mass and being capable of storing heat for a long period.

One example of such chemical heat storage technologies is technologies of fixing ammonia on a metal salt. For example, Patent Document 1 states that when a chloride of an alkaline earth metal or a chloride of a transition metal occludes ammonia, heat is generated, and when ammonia is discharged, heat is absorbed. Patent Document 1 states as a specific example thereof a chemical heat storage apparatus equipped with a solid phase reactor and a condenser connected to the solid phase reactor. In the interior of the solid phase reactor, an ammine complex of a metal chloride is charged. Ammonia gas is released from the ammine complex of the metal chloride by supply of a heating source. The solid phase reactor holds the pressure of the ammonia gas. The condenser condenses the ammonia gas by supply of cooling water.

Further, for example, Patent Document 2 discloses a catalyst warming-up apparatus for warming-up a purification catalyst of a purification apparatus for exhaust gas by utilizing the following reversible reaction, and carrying out an exothermic reaction by supplying water to calcium oxide under a low-temperature environment.

$$CaO + H_2O \leftrightarrow Ca(OH)_2 + Q \text{ (reversible reaction)}$$

Patent Document 3 discloses a system component which comprises a component section, which has a closed cavity structure, and walls of the closed cavity structure form a reaction chamber, in which a stationary system component is arranged as a reactive heating system. The stationary system component is arranged on the walls, particularly as coated, solid-body in the reaction chamber or as a coating. A related method for heating a system component involves carrying out a physical reaction with a stationary system component made of zeolite component, water or alcohol, and carrying out a chemical reaction with a stationary system component made of alkaline earth metal oxide, particularly potassium oxide.

PRIOR ART DOCUMENTS

Patent Documents

Patent Document 1: JP H06-109388 A
Patent Document 2: JP S59-208118 A
Patent Document 3: EP 2 410 147 A2

Non-Patent Document

Non-Patent Document: Bull. Chem. Soc. Jpn. 77 (2004) 123

SUMMARY OF THE INVENTION

Problems that the Invention is to Solve

Among the above-mentioned conventional technologies, however, the chemical heat storage apparatus needs to have a mechanism to control the gas/liquid phase change because the chemical heat storage apparatus is equipped with a condenser to condense ammonia gas. The apparatus is therefore likely to become complicated.

The catalyst warming-up apparatus, since needing water, is difficult to operate below the freezing point. Heat is necessary that equates to a temperature of 400°C or higher for the regeneration reaction ($CaO + H_2O \leftarrow Ca(OH)_2 + Q$) of calcium oxide after the warming-up. If the heat is intended to be obtained from exhaust gas from an internal combustion engine (hereinafter, engine), a long time is necessary. The regeneration is not completed depending on the operation state, and the warming-up of the purification catalyst may possibly not be carried out at the succeeding starting time.

Technologies of fixing ammonia to a metal chloride are known as described above. In the case of employing a warming-up method of utilizing an exothermic reaction when ammonia is fixed by adsorption or the like, since ammonia is hardly frozen even below the freezing point, the regeneration at a starting time and at a low-temperature time is possible. However, since ammonia is liable to be pyrolyzed into hydrogen and nitrogen when being exposed to a high temperature of 400°C or higher, there is a fear that the warming-up function cannot be maintained stably.

For example, in vehicles equipped with a diesel engine or the like, exhaust gas discharged from their engine usually contains, in addition to nitrogen oxides ($NO_x$), carbon monoxide (CO), hydrocarbons (HC) and the like, particulate matter (hereinafter, abbreviated to PM in some cases) containing as main components carbonaceous substances including a soluble organic fraction (SOF), which is cinder of soot, fuel and engine oil. Therefore, purification of exhaust gas by a filter (DPF: Diesel particulate filter; hereinafter, DPF) is carried out by equipping the vehicles with the filter to reduce the particulate substances in the exhaust gases. An example of the DPF includes DPF catalysts in which a noble metal is supported on a base material. PM deposited on a DPF is removed by a combustion treatment at a high temperature reaching 400°C or higher. Therefore, in an exhaust system equipped with a DPF, since the pyrolysis of ammonia is easily caused as described above, application of a chemical heat storage apparatus utilizing ammonia is difficult.

It is an object of the present invention to provide a catalytic reactor having a warming-up function that stably operates while preventing pyrolysis of ammonia, and develops a high catalytic activity irrespective of the usage temperature environment, and also provide a vehicle that stably carries out purification of its exhaust gas irrespective of the usage temperature environment.

Means for Solving the Problems

The present invention has been achieved based on the following findings. That is, if exothermic and endothermic reactions when ammonia is adsorbed to and desorbed from a chemical heat storage material are utilized, the warming-up function can be maintained even under a low-temperature environment. However, there is a case where ammonia is exposed to a high temperature, for example, in an exhaust system carrying out a high-temperature treatment in order to remove PM, such as in a diesel engine. For example, at the PM treatment of a diesel engine, the temperature of its exhaust gas reaches 400°C or higher. In such a temperature range, ammonia is pyrolyzed, and the initial warming-up function cannot continuously be maintained in some cases. The warming-up is usually carried out by heat generation by adsorption of ammonia to a chemical heat storage material. After the warming-up termination, ammonia is recovered for preparation for the succeeding warming-up, and the chemical heat storage material is regenerated to a state of having desorbed ammonia, thereby enabling to carry out repeatedly the warming-up. It is important from the viewpoint of retaining the warming-up function for a long period that ammonia remaining in the system including the piping is previously separated from a high-temperature region, that is, the pressure of ammonia in the system exposed to a high temperature is reduced. After the warming-up, since the difference in magnitude of the ammonia pressure between different places in the system in which ammonia is flowed is low, ammonia is likely to easily remain in the piping and the like. Therefore, it is effective to install an ammonia fixation material developing a high ammonia adsorption capacity even at a low temperature and being capable of removing ammonia remaining in the system by adsorption.

To achieve the foregoing objective and in accordance with one aspect of the present invention, a catalytic reactor is provided that includes a catalytic reaction section, a warming-up section, an ammonia supply section, and an ammonia depressurization section. The catalytic reaction section has a purification catalyst for purifying gas. The warming-up section is located at a position capable of heat-exchanging with the purification catalyst. The warming-up section has a chemical heat storage material that generates heat when ammonia is fixed and absorbs heat when ammonia is desorbed. The ammonia supply section has an adsorbent capable of adsorbing ammonia. The ammonia supply section transfers ammonia from and to the warming-up section by adsorption and desorption of ammonia. The ammonia depressurization section has an ammonia fixation section for fixing ammonia and reduces an ammonia partial pressure at least in the warming-up section after the desorption of ammonia from the chemical heat storage material.

In the catalytic reactor, the catalytic reaction section provided with the purification catalyst to purify exhaust gas discharged from an internal combustion engine is equipped with the warming-up section using the chemical heat storage material to absorb and generate heat by adsorption and desorption of ammonia. The purification catalyst is warmed up by the warming-up section to thereby improve the catalytic activity under a low-temperature environment (including below the freezing point). The catalytic reactor is provided further with the ammonia supply section to desorb ammonia when the purification catalyst is warmed up by the warming-up section, and to adsorb ammonia for preparation for the succeeding warming-up after the warming-up, and the ammonia depressurization section to reduce the ammonia pressure by chemically or physically adsorbing ammonia that has not been completely adsorbed and recovered by the ammonia supply section when ammonia was adsorbed for preparation for the warming-up and remains in the warming-up section, the piping and the like. Although when the temperature of a catalyst is normal temperature (25°C) or lower, the catalytic activity to exhaust gas would be usually insufficient, the warming-up function can thereby be maintained stably. The catalytic reaction section is thereby heated (for example, to about 150°C) and the catalytic activity is highly maintained and the purification function to the exhaust gas is improved. After warming-up, as seen in the purification mode of DPF installed for PM removal in automobiles mounting a diesel engine, exhaust gas of a high temperature reaching 400°C or higher is discharged from an internal combustion engine in some cases. If ammonia is exposed to exhaust gas of such a high temperature, ammonia is pyrolyzed and the initial warming-up function cannot be retained in some cases. In the catalytic reactor according to the present invention, however, ammonia adsorbed to the chemical heat storage material of the warming-up section is gradually desorbed and returns to the ammonia supply section as the chemical heat storage material of the warming-up section is heated by the temperature rise of the exhaust gas after the warming-up, and ammonia remaining in the warming-up section and the piping is further separated by the ammonia depressurization section. Minimization of pyrolysis of ammonia used for warming-up is thereby achieved.

As described above, in the catalytic reactor according to the present invention, the use of ammonia as a medium for heat transport ensures a stable warming-up function under a low-temperature environment (including below the freezing point), and prevents the pyrolysis of ammonia when the catalytic reactor is applied to a gas flow system in which a high-temperature gas to be purified is flowed. Therefore, the use of the catalytic reactor according to the present invention can construct a catalytic purification system capable of stably developing an exhaust gas purification function using a catalyst.

In accordance one embodiment, the adsorbent of the ammonia supply section is preferably a physical adsorbent capable of physically adsorbing ammonia. The use of the physical adsorbent can make small the heat quantity necessary for fixation and desorption of ammonia, and can make the adsorption and desorption of ammonia to be easily carried out with lower energy.

In accordance with one embodiment, the warming-up section preferably has at least one ammonia supply port and a porous body member arranged between the chemical heat storage material and the ammonia supply port, and the porous body member is preferably arranged such that ammonia supplied to the warming-up section through the at least one ammonia supply port diffuses in the porous body member and contacts the chemical heat storage material.

One or more of ammonia supply ports for supplying ammonia are provided, and when ammonia is supplied to the chemical heat storage material located in the warming-up section, the warming-up of a catalyst is started by the exothermic reaction accompanying the chemical adsorption of ammonia to the chemical heat storage material. At this time, since the porous body member having a large number of gas-diffusible pores is provided between the ammonia supply ports and the chemical heat storage material, ammonia is flowed and diffused through the porous body member and supplied to the chemical heat storage material. Hence, the exothermic reaction in the chemical heat storage material can uniformly be caused across the broad range.

In one embodiment, the ammonia fixation section is preferably formed by using a chemical heat storage material to generate heat when ammonia is fixed and to absorb heat when ammonia is desorbed.

The ammonia fixation section of the ammonia depressurization section has, for example, a function of removing ammonia gas remaining in the warming-up section and in the piping between the warming-up section and the ammonia supply section, and reducing the ammonia pressure (partial pressure). The ammonia fixation section is preferably formed by using a chemical heat storage material. The chemical heat storage material preferably has a higher adsorption capacity of ammonia than that of an adsorbent of the ammonia supply section, and easily chemically adsorb ammonia in a lower temperature range than the chemical heat storage material of the warming-up section. Further providing such an ammonia fixation section separately from the ammonia supply section enables to reduce the pressure of ammonia remaining in the warming-up section and the piping after the warming-up.

In one embodiment, the chemical heat storage material preferably contains at least a metal chloride. More preferably, the metal chloride is selected from the group consisting of alkali metal chlorides, alkaline earth metal chlorides and transition metal chlorides.

Metal chlorides are suitable in the point of being capable of providing a high heat storage density (kJ/kg). The use of a metal chloride enhances the warming-up function of the purification catalyst. Alkali metal chlorides, alkaline earth metal chlorides, and transition metal chlorides are useful in the point of more enhancing the warming-up function.

The heat storage density indicates a heat quantity (kJ) absorbed per kilogram of a metal chloride by desorption of ammonia.

In one embodiment, the ammonia supply section can contain a physical adsorbent selected from the group consisting of activated carbon, mesoporous silica, zeolite, silica gel, and clay minerals.

Activated carbon, mesoporous silica, zeolite, silica gel or a clay mineral, which is a physical adsorbent, exhibits a smaller heat quantity necessary for the desorption or adsorption of 1 mole of ammonia than that of the chemical adsorption material when desorbing ammonia to be introduced to the warming-up section, or again adsorbing ammonia desorbed from the warming-up section after the warming-up termination. Therefore, transfer of ammonia can be carried out in a smaller heat quantity.

In accordance with one embodiment, the chemical heat storage material preferably contains at least one of $MgCl_2$, $MnCl_2$, $CoCl_2$, $NiCl_2$, $MgBr_2$ and $MgI_2$. The ammonia fixation section of the ammonia depressurization section preferably has a chemical heat storage material that generates heat when ammonia is fixed and absorbs heat when ammonia is desorbed. The second chemical heat storage material contains at least one of $BaCl_2$, $CaCl_2$, and $SrCl_2$.

$MgCl_2$, $MnCl_2$, $CoCl_2$, $NiCl_2$, $MgBr_2$ or $MgI_2$ provides a high heat storage density (kJ/kg), and is useful in the point of enhancing the warming-up function, and $BaCl_2$, $CaCl_2$ or $SrCl_2$ easily desorbs fixed ammonia and can supply ammonia to the warming-up section at a lower temperature.

In accordance with one embodiment, the ammonia depressurization section preferably has a heating section that heats the ammonia fixation section by heat-exchanging with the ammonia fixation section through flow of a heat medium.

Carrying out of the temperature control of the ammonia fixation section through the flow of the heating medium allows the rapid temperature control. The separation and removal of ammonia remaining in the warming-up section and the piping is thereby rapidly carried out.

In accordance with another aspect of the present invention, a vehicle is provided that includes an internal combustion engine and a catalytic reactor that is adapted such that exhaust gas discharged from the internal combustion engine flows into the catalytic reactor.

In the vehicle, since the exhaust gas discharged from the internal combustion engine is delivered to the catalytic reactor according to the present invention and is purified, the purification function can stably be developed even when the usage environment is a low-temperature range (including below the freezing point). The removal of the exhaust gas discharged from the vehicle is thereby carried out at a high efficiency.

In accordance with one embodiment, the internal combustion engine is a diesel engine, and the vehicle further includes a carbonaceous substance purification section (for example, DPF) downstream of the catalytic reactor in an exhaust gas flow direction. The carbonaceous substance purification section reduces particular matter (PM) in exhaust gas.

In the carbonaceous substance purification section, since PM is deposited. The PM is also deposited on the filter wall surface and flows into the interior of the wall to be accumulated. This makes one cause of clogging pores of the filter, there is a case where exhaust gas of a high temperature of 400°C or higher is flowed and the DPF regeneration mode for removing the PM is carried out. For such a case, since the catalytic reactor with which the vehicle according to the present invention is equipped prevents ammonia used at the warming-up from being exposed to a high temperature of about 400°C, and prevents the ammonia from being pyrolyzed to hydrogen and nitrogen, the warming-up function can stably be maintained over a long period.

BRIEF DESCRIPTION OF THE DRAWINGS

Fig. 1 is a schematic diagram showing a part of a thermal system of an automobile mounting a catalytic reactor having a warming-up function according to one embodiment of the present invention;
Fig. 2 is a schematic diagram showing one example of the catalytic reactor of Fig. 1;
Fig. 3 is a schematic perspective view specifically showing one example of the gas purifier of Fig. 1;
Fig. 4 is a graph showing relationships between the heat storage temperature and the heat storage density in each compound;
Fig. 5 is a schematic diagram showing the catalytic reactor of Fig. 1 carrying out warming-up by introducing ammonia gas at a cold start;
Fig. 6 is a schematic diagram showing a flow of ammonia gas after warming-up in the catalytic reactor of Fig. 1;
Fig. 7 is a schematic diagram showing the catalytic reactor of Fig. 1 from which remaining ammonia is being removed by an $NH_3$ depressurization heat storage reactor;
Fig. 8 is a schematic diagram showing a valve state of the catalytic reactor of Fig. 1 in a DPF regeneration mode;
Fig. 9 is a schematic diagram showing the catalytic reactor of Fig. 1 in which ammonia desorbed from the $NH_3$ depressurization heat storage reactor is returned to an $NH_3$ adsorption-desorption apparatus to thereby complete regeneration; and.
Fig. 10 is a flowchart showing a warming-up control routine of the catalytic reactor of Fig. 1.

MODES FOR CARRYING OUT THE INVENTION

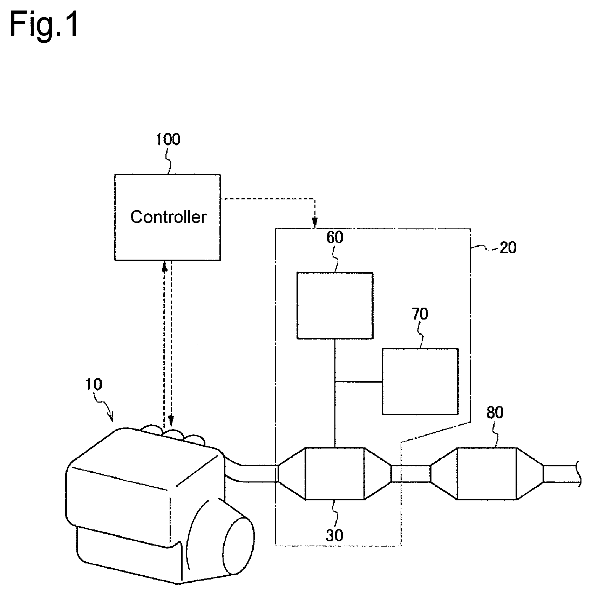

Hereinafter, by reference to Figs. 1 to 10, one embodiment of the catalytic reactor and the vehicle equipped therewith according to the present invention will be described. However, the present invention is not limited to the embodiment described below.

In the present embodiment, a thermal system of an automobile as a vehicle to which a catalytic reactor 20 having a warming-up function is applied will first be described simply, and then, the catalytic reactor 20 mounted on the automobile will be described in detail.

As shown in Fig. 1, an automobile according to the present embodiment is provided with a diesel engine 10, which is an example of an internal combustion engine, a catalytic reactor 20 for purifying exhaust gas discharged from the diesel engine 10, and a PM removal filter (DPF: Diesel particulate filter) 80, which is a carbonaceous substance removal section for removing carbonaceous particulate substances (PM) contained in the exhaust gas, in order in the exhaust direction of the exhaust gas. The diesel engine 10, the catalytic reactor 20 and the like are electrically connected to a controller 100.

The automobile according to the present embodiment is equipped with the diesel engine 10. PM in the exhaust gas from the diesel engine 10 is deposited on the DPF. During the PM removal from the DPF, the catalytic reactor 20 is exposed to a high-temperature environment of 400°C or higher by the flow of the exhaust gas of a high temperature reaching 400°C or higher. As described later, when the catalytic reactor 20 is equipped with a warming-up function using ammonia, there is a fear that ammonia is exposed to a high-temperature environment and pyrolyzed. The catalytic reactor 20 according to the present embodiment is, as described later, equipped with an $NH_3$ depressurization heat storage reactor. Since in the catalytic reactor 20, ammonia is therefore not exposed to a high-temperature environment, the catalytic reactor 20 can retain an ammonia partial pressure in the reactor, that is, a warming-up function, over a long period.

For the PM removal filter (DPF) 80, a base material for DPF or a DPF catalyst composed of a base material for DPF and a catalytic metal supported thereon is usually used. One example of the DPF is a catalyst composed of a porous wall material such as a honeycomb base material composed of cordierite, silicon carbide, a metal or the like, and catalytic particles supported on the interior or the surface of the wall material. The catalytic particle is composed of a noble metal such as platinum (Pt), palladium (Pd) or rhodium (Rh), and a carrier carrying the noble metal.

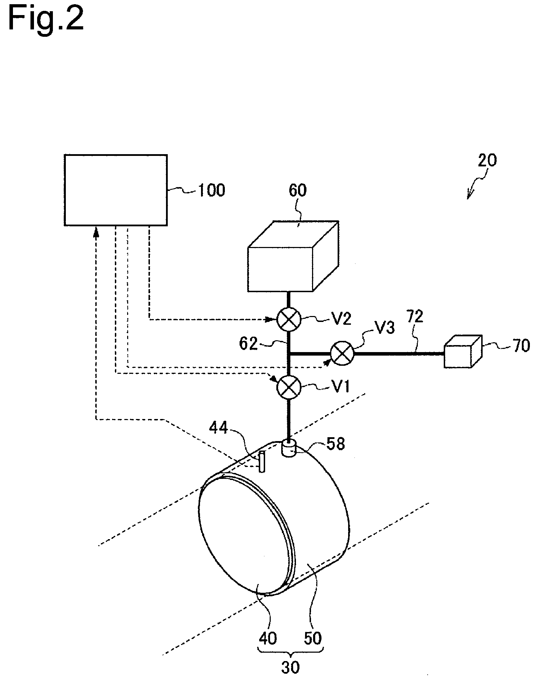

As shown in Fig. 2, a catalytic reactor 20 is equipped with a gas purifier 30 for purification of exhaust gas having a purification catalyst and a warming-up heat storage reactor, which is a warming-up mechanism, an $NH_3$ adsorption-desorption apparatus 60, which is one example of an ammonia supply section capable of adsorbing and desorbing ammonia gas (hereinafter, abbreviated to $NH_3$ in some cases), and an $NH_3$ depressurization heat storage reactor 70, which is an ammonia pressure reduction section for reducing the ammonia pressure in the apparatuses and pipes by removing ammonia gas (remaining ammonia) remaining in the apparatuses and piping by adsorption.

In the temperature range of normal temperature (for example, 25°C) or lower, the catalytic activity of a purification catalyst for purifying exhaust gas is usually low. Hence, when the temperature of the exhaust gas is low, for example, at the time of engine starting and during the engine operation after the engine starting and until the temperature of the exhaust gas rises, a desired purification performance cannot be attained in some cases. This becomes remarkable particularly when the engine is started under a low-temperature environment such as below the freezing point, and in other cases. The catalytic reactor 20 according to the present embodiment is equipped with the warming-up mechanism using ammonia as a warming-up mechanism to previously warm up the purification catalyst. Hence, the catalytic activity is highly maintained even in a low-temperature environment, and the gas purification is promoted. Particularly the warming-up heat storage reactor, which is a warming-up mechanism, since utilizing an exothermic reaction accompanying adsorption of ammonia as described below instead of an exothermic reaction utilizing water, can utilize the exothermic reaction even in an environment below the freezing point. Further, the catalytic reactor 20, which is equipped with the $NH_3$ depressurization heat storage reactor 70, can remove ammonia remaining in the apparatuses such as the warming-up heat storage reactor and the piping from the apparatuses and piping. Even when the warming-up heat storage reactor reaches a high temperature of 400°C or higher, the pyrolysis of ammonia contributing to warming-up, and a decrease in the warming-up function accompanying the pyrolysis are thereby prevented.

The gas purifier 30 is equipped with a catalytic reaction apparatus 40, which is one example of a catalytic reaction section for purifying the exhaust gas by the built-in purification catalyst, and the warming-up heat storage reactor 50, which is one example of a warming-up section having a warming-up function of the purification catalyst.

The catalytic reaction apparatus 40 is equipped with a honeycomb monolith base material 42 to form a honeycomb structure as a support base material, and a catalyst layer provided on the support base material. In the catalyst layer, catalyst particles are supported on carriers. When exhaust gas is introduced to the catalytic reaction apparatus 40, gas components such as HC and CO in the exhaust gas are decomposed by the purification catalyst, and removed from the exhaust gas. Specific examples of the support base material include SiC honeycomb base materials, cordierite honeycomb base materials, and metal honeycomb base materials. Examples of the catalyst particle include particles of noble metals such as platinum (Pt), palladium (Pd), and rhodium (Rh). The carrier carrying the particles includes particles of oxides such as zirconium dioxide ($ZrO_2$), aluminum oxide ($Al_2O_3$), silica, silica-alumina, ceria ($CeO_2$), and zeolite.

In the catalytic reaction apparatus 40, a temperature detection sensor 44 for detecting the temperature of the catalyst layer is attached, and the temperature of the catalyst can be detected at the warming-up or the like.

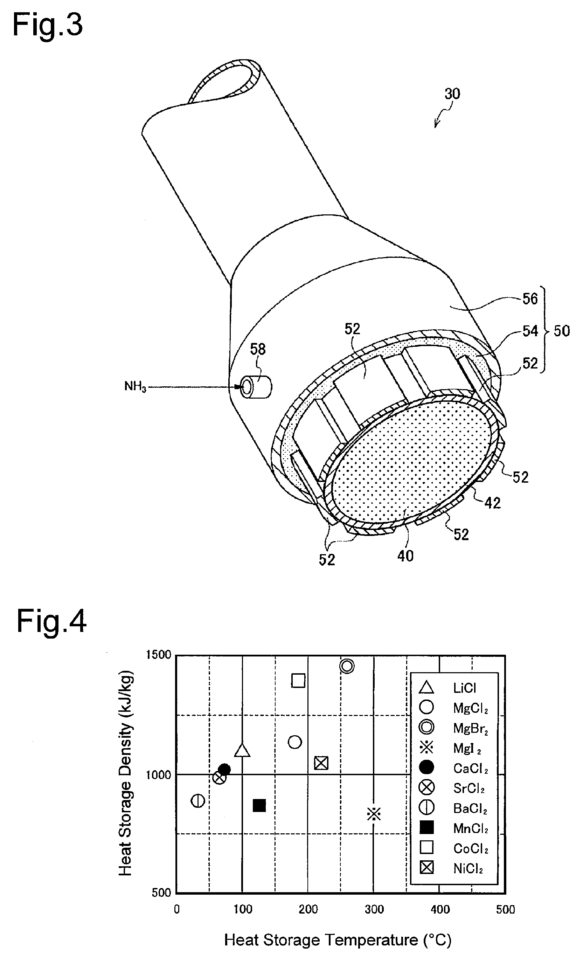

As shown in Fig. 2, the warming-up heat storage reactor 50 is arranged to cover the outer peripheral surface of the catalytic reaction apparatus 40 to be able to heat-exchange with the purification catalyst in the catalytic reaction apparatus 40. Fig. 3 shows a specific structure of the warming-up heat storage reactor. As shown in Fig. 3, the warming-up heat storage reactor 50 is provided with a plurality of plat-like heat storage materials 52 arranged along the outer peripheral surface of the honeycomb monolith base material 42 of the catalytic reaction apparatus 40, and a porous body member 54 covering over the plurality of heat storage materials 52 and spaces between the heat storage materials (that is, the outer peripheral surface of the base material 42). An armor material 56 is arranged on the periphery of the porous body member 54 so as to cover the entire surface of the porous body member; and to the armor material 56, an $NH_3$ inlet port 58, which is an ammonia supply port for introducing ammonia gas ($NH_3$), is attached. That is, the porous body member 54 is arranged between the heat storage materials 52 and the $NH_3$ inlet port 58. In the porous body member 54, flow paths are formed through which $NH_3$ passes through pores of the porous body member 54 and is able to flow.

When $NH_3$ is introduced from the $NH_3$ inlet port 58, the introduced $NH_3$ flows in the porous body member 54 and reaches the positions of the plurality of heat storage materials 52. Thereby, the plurality of heat storage materials 52 contact $NH_3$. At this time, $NH_3$ reacts with each of the heat storage materials 52. The reaction is an exothermic reaction accompanying the adsorption of $NH_3$, and the generated heat is utilized for warming-up of the catalyst.

The heat storage material 52 is formed into a plate shape by pressing a powder of magnesium chloride ($MgCl_2$), which is a chemical heat storage material. In the present embodiment, as shown in Fig. 3, the heat storage material 52 is constituted by arranging platelike molded bodies of the heat storage material. However, the heat storage material 52 may be arranged as a single continuous layer on the entire surface along the outer peripheral surface of the honeycomb monolith base material 42.

The warming-up heat storage reactor 50 according to the present embodiment is provided with $MgCl_2$ (magnesium chloride) as a chemical heat storage material. The reaction between magnesium chloride and ammonia is the following reversible reaction (1), and the warming-up of the purification catalyst can be repeatedly carried out according to the reaction, in accordance with to requirements. That is, when the reaction proceeds in the right direction in the following reversible reaction (1), ammonia is fixed (adsorbed) on the heat storage material, and the heat generation is caused. When the reaction proceeds in the left direction in the following reversible reaction (1), ammonia is desorbed from the heat storage material, and the heat absorption is caused.

$$MgCl_2 \cdot 2NH_3 + 4NH_3 \leftrightarrow MgCl_2 \cdot 6NH_3 + Q^1 \text{ [kJ]} \qquad (1)$$

The chemical heat storage material is not limited to $MgCl_2$, and a compound generating an exothermic reaction at the adsorption of ammonia can be applied. The chemical heat storage material is, from the viewpoint of enhancing the heat storage density in the reactor, preferably metal chlorides, metal bromides, and metal iodides. The chemical heat storage material is more preferably, for example, alkali metal chlorides, alkaline earth metal chlorides, transition metal chlorides, alkali metals bromide, alkaline earth metal bromides, transition metal bromides, alkali metal iodides, alkaline earth metal iodides, and transition metal iodides, and is particularly preferably LiCl, $MgCl_2$, $CaCl_2$, $SrCl_2$, $BaCl_2$, $MnCl_2$, $CoCl_2$, $NiCl_2$, $MgBr_2$, or $MgI_2$. The metal chlorides, metal bromides and metal iodides may be used singly or in combinations of two or more.

Fig. 4 shows, for each compound of LiCl, $MgCl_2$, $CaCl_2$, $SrCl_2$, $BaCl_2$, $MnCl_2$, $CoCl_2$, $NiCl_2$, $MgBr_2$, and $MgI_2$, a relationship between the heat storage temperature (°C) and the heat storage density (kJ/kg). The heat storage temperature (°C) indicates one example of a temperature at which ammonia can be desorbed. The heat storage density (kJ/kg) indicates a heat quantity (kJ) capable of being absorbed by desorption of ammonia per kilogram of the each compound. As shown in Fig. 4, LiCl, $MgCl_2$, $CaCl_2$, $SrCl_2$, $BaCl_2$, $MnCl_2$, $CoCl_2$ and $NiCl_2$ indicate high heat storage densities of about 800 kJ/kg to 1,470 kJ/kg. The heat storage temperature depends on the kind of the compound, and is in the range of about 30°C to 300°C.

In the present embodiment, the kind of the compound can suitably be selected according to the desired ammonia pressure and temperature. Therefore, the breadths of the ammonia pressure and temperature being able to be selected according to an object of the heat utilization are made large. For example, when the adsorption temperature of ammonia is desired to be made low, $BaCl_2$, $CaCl_2$ or $SrCl_2$ can be selected. In contrast, when the adsorption temperature of ammonia is desired to be made relatively high, $MgCl_2$, $MnCl_2$, $CoCl_2$, $NiCl_2$, $MgBr_2$, or $MgI_2$ can be selected.

A molding method is not particularly limited. A known molding method such as pressure molding or extrusion is applicable to, for example, a heat storage material (or a slurry containing the heat storage material) containing a chemical heat storage material and, as required, other components such as a binder. The pressure at the molding can be made to be, for example 20 to 100 MPa, and is preferably 20 to 40 MPa.

In the interior of the $NH_3$ adsorption-desorption apparatus 60, an activated carbon as a physical adsorbent to adsorb ammonia is provided. The $NH_3$ adsorption-desorption apparatus 60 communicates with the warming-up heat storage reactor 50 through an $NH_3$ flow pipe 62 through which $NH_3$ is flowed. The $NH_3$ adsorption-desorption apparatus 60, at the warming-up of the purification catalyst, discharges ammonia gas and supplies the ammonia gas to the warming-up heat storage reactor 50, and after the warming-up termination, again adsorbs ammonia gas discharged from the warming-up heat storage reactor 50 and recovers the ammonia gas. In such a manner, the $NH_3$ adsorption-desorption apparatus 60 transfers ammonia to and from the warming-up heat storage reactor 50.

The use of an adsorbent capable of adsorbing ammonia reduces the heat quantity necessary for the fixation and desorption of ammonia, and thus can make ammonia to be easily adsorbed and desorbed in a lower energy. For example, while the heat quantity necessary for the fixation and desorption of 1 mole of ammonia is 40 to 60 kJ/mol for a chemical heat storage material (for example, $LiCl$, $MgCl_2$, $CaCl_2$, $SrCl_2$, $BaCl_2$, $MnCl_2$, $CoCl_2$, $NiCl_2$, $MgBr_2$ or $MgI_2$), that can be suppressed to 20 to 30 kJ/mol for the physical adsorbent.

As shown in Fig. 2, in the present embodiment, the $NH_3$ adsorption-desorption apparatus 60 communicates with the warming-up heat storage reactor 50 through the $NH_3$ flow pipe 62. If there are differences in ammonia pressure between the $NH_3$ adsorption-desorption apparatus 60, and the warming-up heat storage reactor 50 and the $NH_3$ flow pipe 62, the pressure differences can flow ammonia gas therebetween. For example, when the purification catalyst is warmed up, the ammonia partial pressure in the $NH_3$ adsorption-desorption apparatus 60 is higher than the ammonia partial pressure in the warming-up heat storage reactor 50 and the $NH_3$ flow pipe 62 due to adsorbed ammonia. Therefore, by making valves V1 and V2 attached to the $NH_3$ flow pipe 62 in the opened state, ammonia gas can be supplied to the warming-up heat storage reactor 50.

Due to the heat generation by supply of ammonia, the temperature of the warming-up heat storage reactor 50 is raised. Since the heat absorption and generation caused by the desorption and adsorption of ammonia in the adsorbent is based on a fixed reversible reaction, for example, by regulating the $NH_3$ partial pressure in the warming-up heat storage reactor 50 in a certain range, the temperature of the warming-up heat storage reactor 50 is maintained at a desired temperature (a constant temperature near 150°C).

As the adsorbent, a porous body member can be used. The pore diameter of the porous body member is preferably 10 nm or smaller from the viewpoint of more improving the reactivity of the fixation and desorption of ammonia by adsorption (preferably physical adsorption). The lower limit value of the pore diameter is preferably 0.5 nm from the viewpoint of the production suitability and the like. Also from the similar viewpoint, the porous body member is preferably a primary particle aggregate obtained by aggregating primary particles having an average primary particle diameter of 50 $\mu$m or smaller. The lower limit of the average primary particle diameter is preferably 1 $\mu$m from the viewpoint of the production suitability and the like.

Examples of the adsorbent include, in addition to the activated carbon used in the present embodiment, mesoporous silica, zeolite, silica gel and clay minerals. The activated carbon has a specific surface area by BET method of preferably 500 $m^2$/g or larger and 2,500 $m^2$/g or smaller, and more preferably 1,000 $m^2$/g or larger and 2,500 $m^2$/g or smaller. The clay minerals may be non-bridged clay minerals, or may be bridged clay minerals. Examples of the clay mineral include sepiolite.

In the present invention, the kind of the adsorbent (preferably a porous body member) can suitably be selected according to the pressure and temperature of ammonia. The adsorbent preferably contains at least an activated carbon from the viewpoint of more improving the reactivity of the fixation and desorption of ammonia by adsorption.

When the heat storage material to absorb and generate heat by transfer of ammonia by using the adsorbent (preferably a physical adsorbent), the content ratio of the adsorbent in the heat storage material is, from the viewpoint of more highly maintaining the reactivity of the fixation and desorption of ammonia, preferably 80% by volume or higher, and more preferably 90% by volume or higher.

When the heat storage material using the adsorbent is utilized as a molded body, the heat storage material preferably contains, in addition to the adsorbent, a binder. The incorporation of the binder, since making the shape of the molded body to be more easily maintained, more improves the reactivity of the fixation and desorption of ammonia by adsorption. The heat storage material may contain, as required, in addition to the adsorbent and the binder, other components. Examples of the other components include heat-conductive inorganic materials such as carbon fibers and metal fibers.

The binder is preferably a water-soluble binder. Examples of the water-soluble binder include polyvinyl alcohols and trimethyl cellulose.

When the heat storage material is constituted by using the adsorbent and the binder, the content ratio of the binder in the heat storage material is, from the viewpoint of more effectively maintaining the shape of the molded body, preferably 5% by volume or higher, and more preferably 10% by volume or higher.

A molding method of the molded body is not particularly limited. Examples of the method include a method for molding, for example, a heat storage material (or a slurry containing the heat storage material) containing an adsorbent (and as required, a binder and other components) by known molding means such as pressure molding or extrusion. The pressure at the molding can be made to be, for example 20 to 100 MPa, and is preferably 20 to 40 MPa.

In the interior of the $NH_3$ depressurization heat storage reactor 70, a chemical heat storage material as an ammonia fixation section to fix ammonia is provided. The $NH_3$ depressurization heat storage reactor 70 is a low-temperature operation type heat storage reactor. The $NH_3$ depressurization heat storage reactor 70 is connected to a midway section of the $NH_3$ flow pipe 62 through an $NH_3$ flow pipe 72. The $NH_3$ depressurization heat storage reactor 70 communicates with the warming-up heat storage reactor 50 and the $NH_3$ adsorption-desorption apparatus 60 through the $NH_3$ flow pipes 62 and 72.

The $NH_3$ depressurization heat storage reactor 70, after the warming-up termination of the purification catalyst, recovers ammonia gas by adsorbing ammonia gas present in the warming-up heat storage reactor 50 and the $NH_3$ flow pipe 62. That is, after the warming-up termination of the purification catalyst, when the warming-up heat storage reactor 50 is further heated along with a temperature rise of the warming-up exhaust gas, $NH_3$ adsorbed by the warming-up heat storage reactor 50 (heat storage material 52) is desorbed from the heat storage reactor 50, and desorbed $NH_3$ is returned to the $NH_3$ adsorption-desorption apparatus 60 through the $NH_3$ flow pipe 62 and again adsorbed by the $NH_3$ adsorption-desorption apparatus 60. Thereby, the regeneration of the $NH_3$ adsorption-desorption apparatus 60 is started. $NH_3$ is, however, liable to remain in the warming-up heat storage reactor 50 and in the $NH_3$ flow pipe 62. In the present embodiment, the $NH_3$ depressurization heat storage reactor 70 is a low-temperature operation type heat storage reactor equipped with the heat storage material exhibiting a high $NH_3$ adsorption power at a lower temperature than the $NH_3$ adsorption-desorption apparatus 60. Hence, the remaining $NH_3$ is removed and the ammonia pressure in the warming-up heat storage reactor 50 and the $NH_3$ flow pipe 62 can be reduced.

The heat storage material provided in the $NH_3$ depressurization heat storage reactor 70 may be a heat storage material using chemical adsorption or physical adsorption as long as the material is able to reduce the ammonia pressure in the reactor and the piping. The $NH_3$ depressurization heat storage reactor 70 can be equipped with, but not limited to the chemical heat storage material used in the present embodiment, another chemical heat storage material, or a physical adsorbent to fix $NH_3$ by physical adsorption.

For the ammonia fixation section of the $NH_3$ depressurization heat storage reactor 70, a chemical adsorbent is suitably used from the viewpoint of rapidly reducing the ammonia pressure in the apparatuses and piping. The use of the chemical heat storage material, since the chemical heat storage material has a high heat storage density and is excellent in the adsorbability of ammonia gas, can ensure a higher $NH_3$ adsorbability in the $NH_3$ depressurization heat storage reactor 70 than in the $NH_3$ adsorption-desorption apparatus 60.

The chemical heat storage material of the ammonia fixation section is preferably a metal chloride. The chemical heat storage material is more preferably, for example, a chloride of an alkali metal, a chloride of an alkaline earth metal, or a chloride of a transition metal. Examples of the chemical heat storage material include the compounds similar to those for the warming-up heat storage reactor 50. As described above, the chemical heat storage material causes an exothermic reaction at the ammonia adsorption, and causes an endothermic reaction at the ammonia desorption. The $NH_3$ depressurization heat storage reactor 70 using the chemical heat storage material adsorbs ammonia by being regulated to a temperature easily generating heat, and discharges ammonia by being heated to thereby regenerate the heat storage material. The chemical heat storage material of the $NH_3$ depressurization heat storage reactor 70 is suitably $BaCl_2$, $CaCl_2$ or $SrCl_2$ in the point of ensuring a good adsorption effect of ammonia in a low thermal energy. The details of the physical adsorbents have already been described.

The chemical heat storage material of the $NH_3$ depressurization heat storage reactor 70 according to the present embodiment is molded by press-molding a powder of calcium chloride ($CaCl_2$). The use of $CaCl_2$ can lead to such an anticipation that the $NH_3$ depressurization heat storage reactor 70 has a higher $NH_3$ adsorbability than the warming-up heat storage reactor 50 using $MgCl_2$ in a low-temperature region. When $CaCl_2$ is used, the adsorption-desorption of ammonia is carried out according to the following reversible reaction (2), accompanied by heat generation and absorption.

$$CaCl_2 \cdot 2NH_3 + 6NH_3 \leftrightarrow CaCl_2 \cdot 8NH_3 + Q^2 \,[kJ] \cdots (2)$$

For molding, a molding method similar to that for the chemical heat storage material used for the warming-up heat storage reactor 50 can be applied.

As shown in Fig. 2, in the present embodiment, the $NH_3$ depressurization heat storage reactor 70 is connected to the warming-up heat storage reactor 50 and the $NH_3$ adsorption-desorption apparatus 60 through the $NH_3$ flow pipes 62 and 72. Ammonia desorbed from the warming-up heat storage reactor 50 by a temperature rise after the warming-up termination of the warming-up heat storage reactor 50 is again adsorbed to the $NH_3$ adsorption-desorption apparatus 60, and thereafter, by making a valve V3 attached to the $NH_3$ flow pipe 72 to be in the opened state, ammonia gas remaining in the warming-up heat storage reactor 50 and the $NH_3$ flow pipes 62 and 72 can be recovered. It can be thereby avoided that ammonia is decomposed in DPF by being heated to 400°C or higher by a high-temperature exhaust gas flowed when PM is subjected to a combustion treatment in DPF.

In the present embodiment, the description has been made by taking as an example a case where $MgCl_2$,

which is a chemical heat storage material, is used as the heat storage material 52 of the warming-up heat storage reactor 50, and $CaCl_2$, which is a chemical heat storage material, is used as the heat storage material of the $NH_3$ depressurization heat storage reactor 70, but a case is not limited thereto, and may be a combination of the heat storage material 52 of the warming-up heat storage reactor 50 containing $MgCl_2$, $MnCl_2$, $CoCl_2$, $NiCl_2$, $MgBr_2$ or $MgI_2$ and the heat storage material of the $NH_3$ depressurization heat storage reactor 70 containing a physical adsorbent. It is particularly preferable from the viewpoint of ensuring the heat storage density in the warming-up heat storage reactor 50 and improving the ammonia adsorbability when the ammonia pressure is reduced that the warming-up heat storage reactor 50, which is the warming-up section, contains $MgCl_2$, $MnCl_2$, $CoCl_2$, $NiCl_2$, $MgBr_2$ or $MgI_2$ as the heat storage material 52, and the $NH_3$ depressurization heat storage reactor 70 contains $BaCl_2$, $CaCl_2$ or $SrCl_2$ as the heat storage material.

The temperature range where the catalytic reactor is operated can be made to be in the range of -30°C or higher and 250°C or lower. The ammonia pressure (operating pressure) in the catalytic reactor can be made to be, for example, in the range of 0.1 atm or higher and 10 atm or lower.

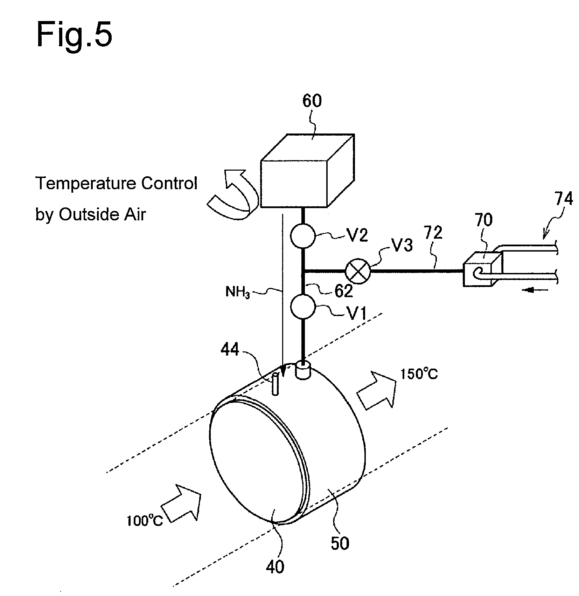

Then, operation of the catalytic reactor 20 according to the present embodiment will be described by reference to Figs. 5 to 9. When the ignition switch (IG switch) is turned on and the diesel engine is started, or at the starting of the diesel engine, the purification catalyst of the catalytic reaction apparatus 40 is in a low temperature. As shown in Fig. 5, the valves V1 and V2 are opened to thereby introduce ammonia gas from the $NH_3$ adsorption-desorption apparatus 60 to the warming-up heat storage reactor 50. The $NH_3$ adsorption-desorption apparatus 60 is in such a state in which ammonia is beforehand adsorbed. Since the differential pressure between the ammonia pressure in the $NH_3$ adsorption-desorption apparatus 60 and the ammonia pressure in the $NH_3$ flow pipe 62 and the warming-up heat storage reactor 50 is large, ammonia gas is transferred to the warming-up heat storage reactor 50 through the $NH_3$ flow pipe 62 by the differential pressure by following the opening of the valves. As shown in Fig. 3, in the warming-up heat storage reactor 50, the ammonia gas introduced from the $NH_3$ inlet port 58 flows in the porous body member 54 and contacts each of the heat storage materials 52. Each of the heat storage materials, as indicated by the reversible reaction (1), reacts with ammonia and generates heat. By utilizing this heat generation, the purification catalyst is warmed up to a predetermined temperature (for example, 150°C). At this time, the exhaust gas of, for example, 100°C discharged from the diesel engine is discharged after being purified with the purification catalyst of, for example, 150°C.

The $NH_3$ adsorption-desorption apparatus 60 according to the present embodiment does not necessarily need a mechanism of heating the physical adsorbent. In the $NH_3$ adsorption-desorption apparatus 60, however, a heater, which heats the physical adsorbent by heat exchange between the physical adsorbent and a heat medium through flowing the heat medium such as water, alcohol, or mixture thereof, may be arranged as a heat exchanger, from the viewpoint of more effectively carrying out desorption of ammonia in a low-temperature environment such as below the freezing point.

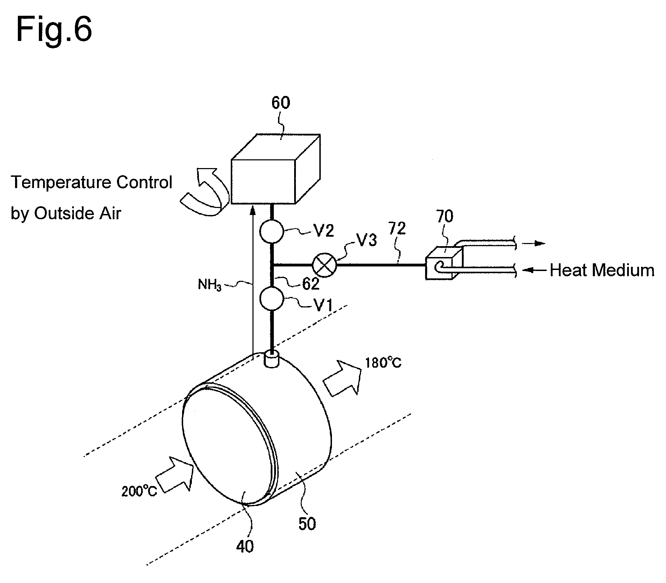

When the purification catalyst is warmed up to a target temperature (for example, 150°C), the warming-up is terminated. After the termination of the warming-up, the chemical heat storage material of the warming-up heat storage reactor 50 is also heated along with the temperature rise of the purification catalyst due to the temperature rise of the exhaust gas. As shown in Fig. 6, if the exhaust gas of, for example, 200°C is delivered to the catalytic reaction apparatus 40 with the valves V1 and V2, which are maintained in the opened state, $NH_3$ coordinated (adsorbed) to $MgCl_2$ is desorbed. The ammonia pressure in the warming-up heat storage reactor 50 thereby becomes higher than the ammonia pressure in the $NH_3$ adsorption-desorption apparatus 60 and the $NH_3$ flow pipe 62. The ammonia gas returns to the $NH_3$ adsorption-desorption apparatus 60 through the $NH_3$ flow pipe 62 due to the differential pressure. In such a manner, the ammonia gas adsorbed by the warming-up heat storage reactor 50 (heat storage material 52) at the warming-up is desorbed by the temperature rise of the purification catalyst along with the temperature rise of the exhaust gas, and again adsorbed to the $NH_3$ adsorption-desorption apparatus 60. As a result, the $NH_3$ adsorption-desorption apparatus 60 is regenerated (heat storage) for preparation for the succeeding warming-up. Since the $NH_3$ desorption at this time is an endothermic reaction, the temperature of the exhaust gas becomes lower than the temperature of the exhaust gas at the introduction. When the regeneration is completed, the valve V2 is closed. The regeneration completion can be determined from the ammonia pressure in the $NH_3$ adsorption-desorption apparatus 60 caused by the ammonia adsorbed in the $NH_3$ adsorption-desorption apparatus 60.

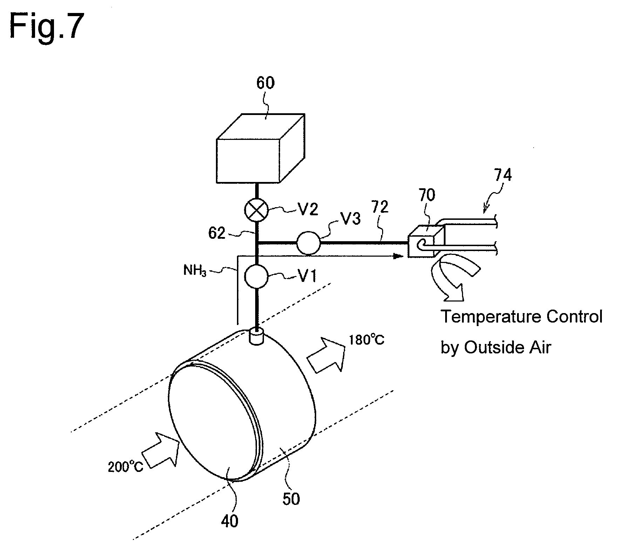

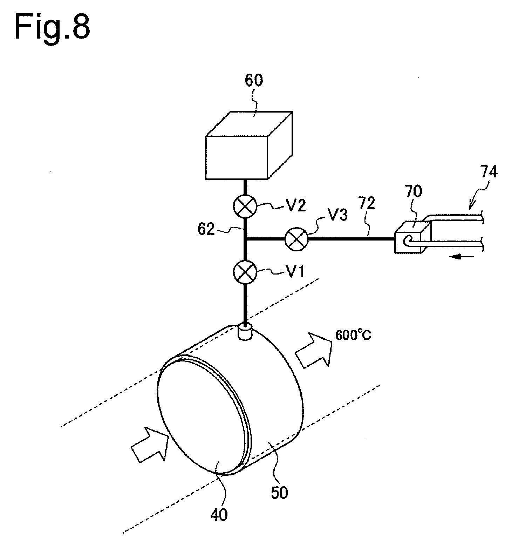

After the completion of the regeneration (heat storage) of the $NH_3$ adsorption-desorption apparatus 60, ammonia of a high pressure (for example, 4 atm) still remains in the warming-up heat storage reactor 50 and the $NH_3$ flow pipe 62 and a part of the $NH_3$ flow pipe 72 (a part excluding the section between the valve V3 and the $NH_3$ depressurization heat storage reactor 70). At this time, since the differential pressure between the $NH_3$ adsorption-desorption apparatus 60 and the $NH_3$ flow pipe 62 is small, all of the ammonia gas in the $NH_3$ flow pipe 62 and the above-mentioned part of the $NH_3$ flow pipe 72 does not completely return to the $NH_3$ adsorption-desorption apparatus 60. Therefore, as shown in Fig. 7, the valve V3 is opened with the valve V2 being closed to thereby connect the warming-up heat storage reactor 50 and the $NH_3$ depressurization heat storage reactor 70. At this time, the valve V1 remains in the opened state. Thereby, ammonia gas remaining in the reactors and the pipes is introduced to the $NH_3$ depressurization heat storage reactor 70, which is a low-temperature operation type heat storage apparatus capable of coordination-bonding and adsorbing ammonia at a low pressure, and adsorbed to the chemical heat storage material. Since the adsorption is an exothermic reaction, at this time, by cooling the chemical heat storage material in the $NH_3$ depressurization heat storage reactor 70 by the outside air, the adsorption reaction (exothermic reaction) of ammonia is progressed in a favorable manner. Ammonia in the warming-up heat storage reactor 50 and the $NH_3$ flow pipe 62 and the above-mentioned section of the $NH_3$ flow pipe 72 is thus rapidly removed. Thereafter, among the valves in the opened state, at least the valve V1 is closed for the purpose of not undergoing the influence of the temperature change. As shown in Fig. 8, in the present embodiment, both of the valves V1 and V3 are closed.

The $NH_3$ depressurization heat storage reactor 70 according to the present embodiment is further equipped with a flow pipe to flow a heat medium, and a heater 74, which heats the chemical heat storage material by heat exchange between the chemical heat storage material and the heat medium through the flow of the heat medium, is provided as a heat exchanger. The heater 74 is equipped with a circulation system utilizing a flow pipe to circulate the heat medium. The flow pipe is provided with a heater (not shown in Fig.) that heats the heat medium to a desired temperature. As the heat medium, water, an organic solvent (an alcohol such as ethanol, a glycol such as ethylene glycol, or the like), or a mixture thereof can be used.

In the automobile according to the present embodiment equipped with the diesel engine, a treatment to regenerate the DPF is carried out by burning and removing PM deposited on the DPF. In this case, since the regeneration treatment of the PM removal filter (DPF) 80 is carried out at a high temperature of, for example, 600°C, as shown in Figs. 1 and 8, a high-temperature gas of 600°C is flowed also to the catalytic reaction apparatus 40 arranged upstream of the DPF 80 in the exhaust gas flow direction. Therefore, the warming-up heat storage reactor 50 is exposed to a high-temperature environment of 600°C. At this time, since the warming-up heat storage reactor 50 and a part of the $NH_3$ flow pipe 62 connected thereto are in such a state in which remaining ammonia has already been removed, the decrease of the warming-up function by the pyrolysis of the remaining ammonia is prevented. The warming-up function and the purification function of the exhaust gas of the catalyst in the gas purifier 30 are thereby enabled to be stably maintained over a long period.

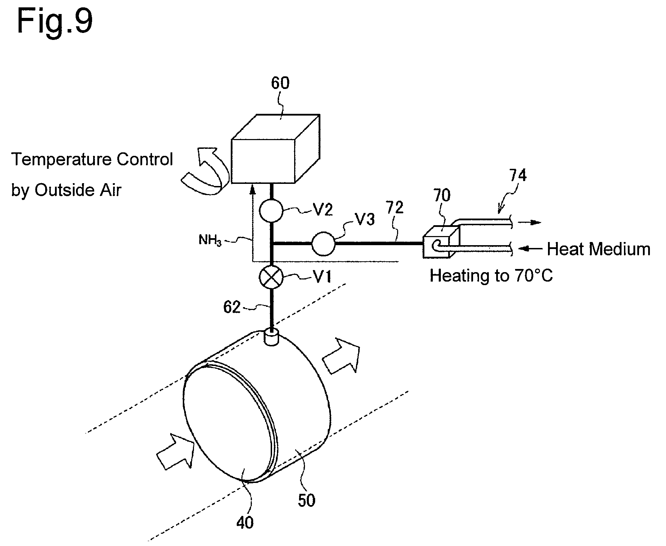

After the remaining ammonia gas is removed and the valves V1 to V3 are closed as described above, as shown in Fig. 9, the valves V2 and V3 are opened to thereby connect the $NH_3$ adsorption-desorption apparatus 60 with the $NH_3$ depressurization heat storage reactor 70. The valve V1 remains in the closed state. At this time, the chemical heat storage material in the $NH_3$ depressurization heat storage reactor 70 is heated to about 70°C by the heater 74 located in the $NH_3$ depressurization heat storage reactor 70 as described before. The physical adsorbent in the $NH_3$ adsorption-desorption apparatus 60, since generating heat by adsorption of ammonia, is cooled by being exposed to the outside air. The chemical heat storage material ($CaCl_2$) built in the $NH_3$ depressurization heat storage reactor 70 is able to desorb $NH_3$ at a low temperature of about 70°C (the reversible reaction (2): $CaCl_2 \cdot 8NH_3 + Q^2 \rightarrow CaCl_2 \cdot 2NH_3 + 6NH_3$). Ammonia gas is transferred and again adsorbed to the $NH_3$ adsorption-desorption apparatus 60 by the differential pressure between the ammonia pressure in the $NH_3$ depressurization heat storage reactor 70 and the ammonia pressure in the $NH_3$ adsorption-desorption apparatus 60 and the $NH_3$ flow pipe 72 at this time. The $NH_3$ adsorption-desorption apparatus 60 is thereby regenerated into the initial state in which ammonia is adsorbed, and the warming-up similar to the above can be carried out repeatedly.

As described above, by removing ammonia gas in the warming-up heat storage reactor 50 and the $NH_3$ flow pipe 62 by the $NH_3$ depressurization heat storage reactor 70 provided separately from the $NH_3$ adsorption-desorption apparatus 60 at a predetermined timing when the ammonia gas is exposed to a high temperature, the warming-up function by the warming-up heat storage reactor 50 can be stably maintained over a long period, and the catalytic activity of the purification catalyst can be stably maintained irrespective of the usage environment.

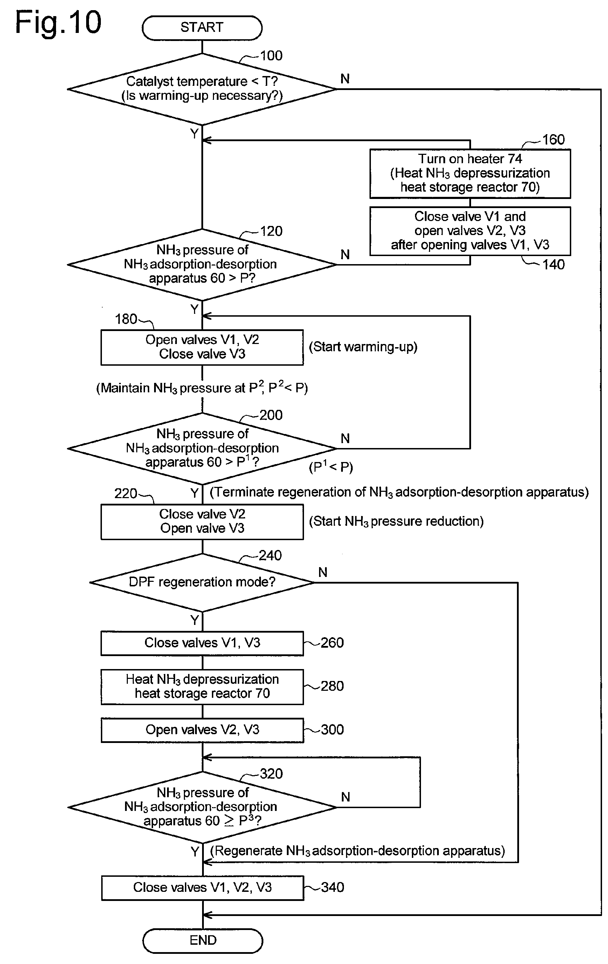

Then, a control routine by a controller 100, which is a control section for controlling the diesel engine (internal combustion engine) according to the present embodiment, will be described. In the control routine, particularly a warming-up control routine for removing ammonia gas will be mainly described by reference to Fig. 10, in association with warming-up of the catalytic reaction apparatus 40 in the catalytic reactor 20 and the execution of the DPF regeneration mode for regenerating the DPF by burning and removing PM deposited on the DPF after the warming-up.

When the ignition switch (IG switch) is turned on to thereby turn on the power source of the controller 100, the system is started, and the warming-up control routine for controlling the warming-up in the catalytic reactor 20 is executed. The starting of the system may be made automatically or manually.

On execution of the process of the present routine, it is first determined whether the purification function by the purification catalyst of the catalytic reaction apparatus 40 normally works, that is, whether warming-up of the purification catalyst is necessary. That is, in step 100, the temperature of the catalyst is detected by the temperature detection sensor 44 attached to the purification catalyst, and it is determined whether the detected temperature is lower than a predetermined temperature T (for example, 180°C) at which the purification of the exhaust gas can be carried out.

In step 100, when it is determined that the detected temperature is lower than the predetermined temperature T, and has not reached a temperature at which the purification of the exhaust gas can be reliably carried out, since the temperature of the catalyst needs to be raised, the process proceeds to step 120. In contrast, when it is determined that the detected temperature is the predetermined temperature T or higher, since the temperature of the catalyst has already reached the temperature at which the purification of the exhaust gas is reliably carried out, and the purification catalyst is able to remove deleterious gases, the present routine process is terminated.

In step 120, the ammonia pressure of the $NH_3$ adsorption-desorption apparatus 60 is measured for preparation for warming-up, and it is determined whether the ammonia pressure exceeds a predetermined pressure P, that is, whether ammonia is in such a state in which the ammonia of an amount necessary for warming-up is adsorbed in the $NH_3$ adsorption-desorption apparatus 60. In step 120, when it is determined that the ammonia pressure exceeds the pressure P, since the state is in a state of being able to start warming-up, in the following step 180, the valves V1 and V2 are opened. At this time, the valve V3 remains in the closed state.

In contrast, when it is determined in step 120 that the ammonia pressure is the pressure P or lower, for example, for the reason that the regeneration of the $NH_3$ adsorption-desorption apparatus 60 was not completed at the preceding warming-up, since ammonia of an amount necessary for warming-up cannot be ensured, in step 140, after the valves V1 and V3 are opened to thereby make remaining ammonia to be adsorbed to the $NH_3$ depressurization heat storage reactor 70, the valve V1 is closed and the valves V2 and V3 are opened. In the following step 160, the heater 74 is turned on to thereby heat the chemical heat storage material of the $NH_3$ depressurization heat storage reactor 70 by the heater 74. Thereby, ammonia adsorbed in the $NH_3$ depressurization heat storage reactor 70 is desorbed from the $NH_3$ depressurization heat storage reactor 70, and the desorbed ammonia is transferred to the $NH_3$ adsorption-desorption apparatus 60. Thereafter, again in step 120, it is determined whether the ammonia pressure exceeds the predetermined pressure P. Until it is determined that the ammonia pressure exceeds the predetermined pressure P, steps 120, 140 and 160 are similarly repeated. When it is determined that the ammonia pressure exceeds the pressure P, the process proceeds to the following step 180, and the valves V1 and V2 are opened.

In the above manner, by making the valves V1 and V2 to be in the opened state, as shown in Fig. 5, ammonia gas is introduced from the $NH_3$ adsorption-desorption apparatus 60 to the warming-up heat storage reactor 50 to thereby start warming-up of the catalytic reaction apparatus 40 by the warming-up heat storage reactor 50.

At this time, by maintaining the ammonia pressure in the system where the valves V1 and V2 are in the opened state, at a predetermined pressure value $P^2$ ($P^2 < P$), the temperature of the purification catalyst is self-regulated to a predetermined temperature (for example, 150°C), which is a target temperature.

After the purification catalyst is warmed up to the target temperature (for example, 150°C), also the temperature of the purification catalyst is raised along with the temperature rise of the exhaust gas, and also the temperature of the chemical heat storage material of the warming-up heat storage reactor 50 is resultantly raised. As shown in Fig. 6, with the valves V1 and V2 being maintained in the opened state, when the exhaust gas of, for example, 200°C is flowed in the catalytic reaction apparatus 40, $NH_3$ coordinated (adsorbed) to $MgCl_2$ (chemical heat storage material) of the warming-up heat storage reactor 50 is desorbed. At this time, the ammonia pressure in the warming-up heat storage reactor 50 becomes higher than the ammonia pressure in the $NH_3$ adsorption-desorption apparatus 60 and the $NH_3$ flow pipe 62, and ammonia gas returns to the $NH_3$ adsorption-desorption apparatus 60 through the $NH_3$ flow pipe 62 by the differential pressure, and the regeneration is started.

Under such a situation, in step 200, it is determined whether the ammonia pressure in the $NH_3$ adsorption-desorption apparatus 60 exceeds a predetermined pressure value $P^1$ ($P^1 < P$) indicating that a certain or greater amount of $NH_3$ has been adsorbed. In step 200, when it is determined that the ammonia pressure in the $NH_3$ adsorption-desorption apparatus 60 exceeds the pressure value $P^1$, since the regeneration of the $NH_3$ adsorption-desorption apparatus 60, which automatically proceeds along with the temperature rise of the catalyst is terminated, in step 220, the valve V2 is closed, and the valve V3 is opened. The valve V1 remains in the opened state. The interior of the warming-up heat storage reactor 50 and the interior of the $NH_3$ flow pipe 62 are in a state in which high-pressure ammonia remains. By opening the valve V3, the remaining ammonia is adsorbed and rapidly removed by the low-temperature operation type $NH_3$ depressurization heat storage reactor 70. In such a manner, the ammonia pressure in the warming-up heat storage reactor 50 and the $NH_3$ flow pipe 62 is reduced.

In contrast, in step 200, when it is determined that the ammonia pressure in the $NH_3$ adsorption-desorption apparatus 60 is lower than the pressure value $P^1$, since the warming-up has not proceeded, or the regeneration of the $NH_3$ adsorption-desorption apparatus 60 after the warming-up has not proceeded, the process returns to step 180, and steps 180 and 200 are similarly repeated.

In the following step 240, it is determined whether the DPF regeneration mode for burning and removing PM deposited on the DPF needs to be executed. In step 240, when it is determined that the DPF regeneration mode needs to be executed, in the following step 260, the valves V1 and V3 are closed in order to avoid pyrolysis of ammonia due to the flow of the exhaust gas of a high temperature at the DPF regeneration. In contrast, in step 240, when it is determined that the DPF regeneration mode does not need to be executed, since there is no fear of the pyrolysis of ammonia, the process proceeds to step 340, and all the valves (V1 to V3) are closed and the process of the present routine is terminated.

After the valves V1 and V3 are closed in step 260 (also the valve V2 is in the closed state), in step 280, the $NH_3$ depressurization heat storage reactor 70 is heated by the heater 74 in order to return the remaining ammonia

adsorbed in the $NH_3$ depressurization heat storage reactor 70 to the $NH_3$ adsorption-desorption apparatus 60, irrespective of before or after the execution of the DPF regeneration mode. Further in step 300, the valves V2 and V3 are opened to connect the $NH_3$ adsorption-desorption apparatus 60 with the $NH_3$ depressurization heat storage reactor to thereby return the remaining ammonia to the $NH_3$ adsorption-desorption apparatus 60.

In the following step 320, it is determined whether the ammonia pressure in the $NH_3$ adsorption-desorption apparatus 60 is restored to a predetermined value $P^3$ or higher, which can be regarded to be substantially the same as the predetermined pressure P before the start of the warming-up. When it is determined that the ammonia pressure in the $NH_3$ adsorption-desorption apparatus 60 at this time point is the predetermined value $P^3$ or higher, since the regeneration of the $NH_3$ adsorption-desorption apparatus 60 is substantially completed, all the valves (V1 to V3) are closed in step 340, and the process of the present routine is terminated.

In step 320, when it is determined that the ammonia pressure in the $NH_3$ adsorption-desorption apparatus 60 is lower than the predetermined value $P^3$, it is assumed that ammonia gas still remains in the $NH_3$ depressurization heat storage reactor 70 and the $NH_3$ flow pipe 62. Since the regeneration of the $NH_3$ adsorption-desorption apparatus 60 is not completed, by repeating step 320 until the ammonia pressure reaches the predetermined value $P^3$ or higher, the completion of the regeneration is watched and waited. Thereafter, when it is determined that the ammonia pressure in the $NH_3$ adsorption-desorption apparatus 60 is the predetermined value $P^3$ or higher, the process proceeds to step 340, and all the valves are closed, and the process of the present routine is thereafter terminated.

In the above embodiment, the case where $MgCl_2$ and $CaCl_2$ are used as the chemical heat storage materials, and the activated carbon, which is a physical adsorbent, is used as the adsorbent capable of adsorbing ammonia has been mainly described. However, the chemical heat storage materials and the adsorbent are not limited thereto. If other chemical heat storage materials and adsorbents described above other than $MgCl_2$, $CaCl_2$ and the activated carbon are used, the same advantages as in the above embodiment are attained.

Further in the above embodiment, the case where the chemical heat storage material is used as the ammonia fixation section of the $NH_3$ depressurization heat storage reactor 70 has been mainly described, but a physical adsorbent may be used in place of the chemical heat storage material. Also in this case, by making the adsorbability of ammonia of the ammonia fixation section of the $NH_3$ depressurization heat storage reactor 70 superior to that of the chemical heat storage material of the warming-up heat storage reactor 50, the same advantages as in the above embodiment using the chemical heat storage material can be attained.

**Claims**

1. A catalytic reactor (20) comprising:

    a catalytic reaction section (40) having a purification catalyst for purifying gas; and
    a warming-up section (50) which has a chemical heat storage material (52) that generates heat when ammonia is fixed and absorbs heat when ammonia is desorbed;
    **characterized in that**
    the warming-up section (50) is located at a position capable of heat-exchanging with the purification catalyst;
    an ammonia supply section (58) has an adsorbent capable of adsorbing ammonia, wherein the ammonia supply section (58) transfers ammonia from and to the warming-up section (50) by adsorption and desorption of ammonia; and
    an ammonia depressurization section (70) has an ammonia fixation section for fixing ammonia and reduces an ammonia partial pressure at least in the warming-up section (50) after the desorption of ammonia from the chemical heat storage material (52).

2. The catalytic reactor (20) according to claim 1, wherein the adsorbent is a physical adsorbent capable of physically adsorbing ammonia.

3. The catalytic reactor (20) according to claim 1 or 2, wherein the adsorbent has at least one selected from the group consisting of activated carbon, mesoporous silica, zeolite, silica gel, and clay minerals.

4. The catalytic reactor (20) according to any one of claims 1 to 3, wherein
    the warming-up section (50) has at least one ammonia supply port (58) and a porous body member (54) arranged between the chemical heat storage material (52) and the ammonia supply port (58), and
    the porous body member (54) is arranged such that ammonia supplied to the warming-up section (50) through the at least one ammonia supply port (58) diffuses in the porous body member (54) and contacts the chemical heat storage material (52).

5. The catalytic reactor (20) according to any one of claims 1 to 4, wherein the chemical heat storage material (52) comprises at least one of a metal chloride, a metal bromide, and a metal iodide.

6. The catalytic reactor (20) according to claim 5, wherein the metal chloride, the metal bromide, or the metal iodide is selected from the group consisting of alkali metal chlorides, alkaline earth metal chlorides, transition metal chlorides, alkali metal bromides, alkaline earth metal bromides, transition metal bromides, alkali metal iodides, alkaline earth metal iodides, and transition metal iodides.

7. The catalytic reactor (20) according to any one of claims 1 to 6, wherein the chemical heat storage material (52) comprises at least one of $MgCl_2$, $MnCl_2$, $CoCl_2$, $NiCl_2$, $MgBr_2$ and $MgI_2$.

8. The catalytic reactor (20) according to any one of claims 1 to 7, wherein
the chemical heat storage material (52) is a first chemical heat storage material (52), and
the ammonia fixation section has a second chemical heat storage material (52) that generates heat when ammonia is fixed and absorbs heat when ammonia is desorbed.

9. The catalytic reactor (20) according to claim 8, wherein the second chemical heat storage material (52) comprises at least one of $AbaCl_2$, $CaCl_2$, and $SrCl_2$.

10. The catalytic reactor (20) according to any one of claims 1 to 9, wherein the ammonia depressurization section (70) has a heating section that heats the ammonia fixation section by heat-exchanging with the ammonia fixation section through flow of a heat medium.

11. A vehicle comprising an internal combustion engine (10) and the catalytic reactor (20) according to any one of claims 1 to 10, wherein the catalytic reactor (20) is adapted such that exhaust gas discharged from the internal combustion engine (10) flows into the catalytic reactor (20).

12. The vehicle according to claim 11, wherein
the internal combustion engine (10) is a diesel engine (10), and
the vehicle further comprises a carbonaceous substance purification section (80) downstream of the catalytic reactor (20) in an exhaust gas flow direction.

**Patentansprüche**

1. Katalytischer Reaktor (20), der Folgendes aufweist:

einen katalytischen Reaktionsabschnitt (40) mit einem Reinigungskatalysator zum Reinigen von Gas; und
einen Aufwärmabschnitt (50), der ein chemisches Wärmespeichermaterial (52) hat, das Wärme erzeugt, wenn Ammoniak fixiert wird und Wärme adsorbiert, wenn Ammoniak desorbiert wird;
**dadurch gekennzeichnet, dass**
sich der Aufwärmabschnitt (50) an einer Position befindet, die in der Lage ist, Wärme mit dem Reinigungskatalysator auszutauschen;
ein Ammoniakzuführabschnitt (58) ein Adsorptionsmittel hat, das in der Lage ist, Ammoniak zu adsorbieren, wobei der Ammoniakzuführabschnitt (58) Ammoniak von dem Aufwärmabschnitt (50) durch Adsorption und zu dem Aufwärmabschnitt (50) durch Desorption von Ammoniak überträgt; und
ein Ammoniakdruckverringerungsabschnitt (70) einen Ammoniakfixierabschnitt zum Fixieren von Ammoniak hat und einen Ammoniakpartialdruck zumindest in dem Aufwärmabschnitt (50) nach der Desorption von Ammoniak von dem chemischen Wärmespeichermaterial (52) reduziert.

2. Katalytischer Reaktor (20) nach Anspruch 1, wobei das Adsorptionsmittel ein physikalisches Adsorptionsmittel ist, das in der Lage ist, Ammoniak physikalisch zu adsorbieren.

3. Katalytischer Reaktor (20) nach Anspruch 1 oder 2, wobei das Adsorptionsmittel zumindest eines hat, das aus der Gruppe ausgewählt ist, die aus Aktivkohle, mesoporöser Kieselerde, Zeolith, Kieselgel und Tonmineralien besteht.

4. Katalytischer Reaktor (20) nach einem der Ansprüche 1 bis 3, wobei
der Aufwärmabschnitt (50) zumindest einen Ammoniakzuführanschluss (58) und ein poröses Körperbauteil (54) hat, das zwischen dem chemischen Wärmespeichermaterial (52) und dem Ammoniakzuführanschluss (58) angeordnet ist, und

das poröse Körperbauteil (54) derart angeordnet ist, dass Ammoniak, das zu dem Aufwärmabschnitt (50) durch den zumindest einen Ammoniakzuführanschluss (58) zugeführt wird, in das poröse Körperbauteil (54) diffundiert und mit dem chemischen Wärmespeichermaterial (52) in Kontakt gelangt.

5. Katalytischer Reaktor (20) nach einem der Ansprüche 1 bis 4, wobei das chemische Wärmespeichermaterial (52) zumindest eines von einem Metallchlorid, einem Metallbromid und einem Metalljodid aufweist.

6. Katalytischer Reaktor (20) nach Anspruch 5, wobei das Metallchlorid, das Metallbromid oder das Metalljodid aus der Gruppe ausgewählt ist, die aus Alkalimetallchloriden, Erdalkalimetallchloriden, Übergangsmetallchloriden, Alkalimetallbromiden, Erdalkalimetallbromiden, Übergangsbromiden, Alkalimetalljodiden, Erdalkalimetalljodiden und Übergangsmetalljodiden besteht.

7. Katalytischer Reaktor (20) nach einem der Ansprüche 1 bis 6, wobei das chemische Wärmespeichermaterial (52) zumindest eines von $MgCL_2$, $MnCl_2$, $CoCl_2$, $NiCl_2$, $MgBr_2$ und $MgI_2$ aufweist.

8. Katalytischer Reaktor (20) nach einem der Ansprüche 1 bis 7, wobei

das chemische Wärmespeichermaterial (52) ein erstes chemisches Wärmespeichermaterial (52) ist, und

der Ammoniakfixierabschnitt ein zweites chemisches Wärmespeichermaterial (52) hat, das Wärme erzeugt, wenn Ammoniak fixiert wird, und Wärme adsorbiert, wenn Ammoniak desorbiert wird.

9. Katalytischer Reaktor (20) nach Anspruch 8, wobei das zweite chemische Wärmespeichermaterial (52) zumindest eines von $BaCl_2$, $CaCl_2$ und $SrCl_2$ aufweist.

10. Katalytischer Reaktor (20) nach einem der Ansprüche 1 bis 9, wobei der Ammoniakdruckverringerungsabschnitt (70) einen Heizabschnitt hat, der den Ammoniakfixierabschnitt durch ein Wärmetauschen mit dem Ammoniakfixierabschnitt durch eine Strömung eines Wärmemediums erwärmt.

11. Fahrzeug mit einer Brennkraftmaschine (10) und dem katalytischen Reaktor (20) nach einem der Ansprüche 1 bis 10, wobei der katalytische Reaktor (20) derart angepasst ist, dass Abgas, das von der Brennkraftmaschine (10) abgegeben wird, in den katalytischen Reaktor (20) strömt.

12. Fahrzeug nach Anspruch 11, wobei

die Brennkraftmaschine (10) eine Dieselmaschine (10) ist, und

das Fahrzeug ferner einen Reinigungsabschnitt (80) einer kohlenstoffhaltigen Substanz stromabwärts des katalytischen Reaktors (20) in einer Abgasströmungsrichtung aufweist.

**Revendications**

1. Réacteur catalytique (20) comprenant :

une section de réaction catalytique (40) ayant un catalyseur de purification pour purifier un gaz ; et

une section de préchauffage (50) ayant un matériau chimique de stockage de chaleur (52) qui génère de la chaleur lorsque de l'ammoniac est fixé et absorbe de la chaleur lorsque l'ammoniac est désorbé;

**caractérisé en ce que**

la section de préchauffage (50) est placée dans une position capable d'échanger de la chaleur avec le catalyseur de purification ;

une section d'alimentation d'ammoniac (58) a un adsorbant capable d'adsorber de l'ammoniac, dans lequel la section d'alimentation d'ammoniac (58) transfère l'ammoniac depuis et vers la section de préchauffage (50) par adsorption et désorption d'ammoniac ; et

une section de dépressurisation d'ammoniac (70) a une section de fixation d'ammoniac pour fixer l'ammoniac et réduit une pression partielle d'ammoniac au moins dans la section de préchauffage (50) après la désorption d'ammoniac à partir du matériau chimique de stockage de chaleur (52).

2. Réacteur catalytique (20) selon la revendication 1, dans lequel l'adsorbant est un adsorbant physique capable d'adsorber physiquement l'ammoniac.

**3.** Réacteur catalytique (20) selon la revendication 1 ou 2, dans lequel l'adsorbant a au moins un élément choisi dans le groupe constitué de charbon activé, de silice mésoporeuse, de zéolite, de gel de silice et de minéraux d'argile.

**4.** Réacteur catalytique (20) selon l'une quelconque des revendications 1 à 3, dans lequel
la section de préchauffage (50) a au moins un orifice d'alimentation d'ammoniac (58) et un élément de corps poreux (54) disposé entre le matériau chimique de stockage de chaleur (52) et l'orifice d'alimentation d'ammoniac (58), et l'élément de corps poreux (54) est disposé de sorte que l'ammoniac fourni à la section de préchauffage (50) à travers le au moins un orifice d'alimentation d'ammoniac (58) se diffuse dans l'élément de corps poreux (54) et entre en contact avec le matériau chimique de stockage de chaleur (52).

**5.** Réacteur catalytique (20) selon l'une quelconque des revendications 1 à 4, dans lequel le matériau chimique de stockage de chaleur (52) comprend au moins un élément parmi un chlorure métallique, un bromure métallique et un iodure métallique.

**6.** Réacteur catalytique (20) selon la revendication 5, dans lequel le chlorure métallique, le bromure métallique, ou l'iodure métallique est choisi dans le groupe constitué de chlorures de métal alcalin, de chlorures de métal alcalino-terreux, de chlorures de métal de transition, de bromures de métal alcalin, de bromures de métal alcalino-terreux, de bromures de métal de transition, d'iodures de métal alcalin, d'iodures de métal alcalino-terreux, et d'iodures de métal de transition.

**7.** Réacteur catalytique (20) selon l'une quelconque des revendications 1 à 6, dans lequel le matériau chimique de stockage de chaleur (52) comprend au moins un élément parmi le $MgCl_2$, le $MnCl_2$, le $CoCl_2$, le $NiCl_2$, le $MgBr_2$ et le $MgI_2$.

**8.** Réacteur catalytique (20) selon l'une quelconque des revendications 1 à 7, dans lequel
le matériau chimique de stockage de chaleur (52) est un premier matériau chimique de stockage de chaleur (52), et la section de fixation d'ammoniac a un second matériau chimique de stockage de chaleur (52) qui génère de la chaleur quand l'ammoniac est fixé et absorbe la chaleur quand l'ammoniac est désorbé.

**9.** Réacteur catalytique (20) selon la revendication 8, dans lequel le second matériau chimique de stockage de chaleur (52) comprend au moins un élément parmi le $BaCl_2$, le $CaCl_2$, et le $SrCl_2$.

**10.** Réacteur catalytique (20) selon l'une quelconque des revendications 1 à 9, dans lequel la section de dépressurisation d'ammoniac (70) a une section chauffante qui chauffe la section de fixation d'ammoniac, en échangeant de la chaleur avec la section de fixation d'ammoniac à travers l'écoulement d'un fluide chauffant.

**11.** Véhicule comprenant un moteur à combustion interne (10) et le réacteur catalytique (20) selon l'une quelconque des revendications 1 à 10, dans lequel le réacteur catalytique (20) est adapté de sorte que le gaz d'échappement déchargé du moteur à combustion interne (10) s'écoule dans le réacteur catalytique (20).

**12.** Véhicule selon la revendication 11, dans lequel le moteur à combustion interne (10) est un moteur diesel (10), et le véhicule comprend en outre une section de purification des substances carbonées (80) en aval du réacteur catalytique (20) dans une direction d'écoulement du gaz d'échappement.

Fig.1

# Fig.2

# Fig.3

# Fig.4

# Fig.5

Temperature Control
by Outside Air

60

V2

V3

72

70

74

$NH_3$

62

V1

44

150°C

100°C

50

40

# Fig.6

Temperature Control
by Outside Air

60

V2

V3

72

70

NH₃

62

V1

Heat Medium

180°C

200°C

50

40

# Fig.7

# Fig.8

# Fig.9

Temperature Control
by Outside Air

60

V2
V3  72  70  74

NH₃

V1

62

Heat Medium

Heating to 70°C

40  50

# Fig.10

START

~100

Catalyst temperature < T?
(Is warming-up necessary?) —— N

Y

~160

Turn on heater 74
(Heat NH$_3$ depressurization
heat storage reactor 70)

Close valve V1 and
open valves V2, V3
after opening valves V1, V3

~140

~120

NH$_3$ pressure of
NH$_3$ adsorption-desorption
apparatus 60 > P? —— N

Y

180~

Open valves V1, V2
Close valve V3         (Start warming-up)

(Maintain NH$_3$ pressure at P$^2$, P$^2$< P)

~200

NH$_3$ pressure of
NH$_3$ adsorption-desorption
apparatus 60 > P$^1$? —— N

(P$^1$< P)

Y   (Terminate regeneration of NH$_3$ adsorption-desorption apparatus)

220~

Close valve V2
Open valve V3         (Start NH$_3$ pressure reduction)

~240

DPF regeneration mode? —— N

Y

Close valves V1, V3   ~260

Heat NH$_3$ depressurization
heat storage reactor 70   ~280

Open valves V2, V3   ~300

~320

NH$_3$ pressure of
NH$_3$ adsorption-desorption
apparatus 60 ≥ P$^3$? —— N

Y   (Regenerate NH$_3$ adsorption-desorption apparatus)

Close valves V1, V2, V3   ~340

END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H06109388 A
- JP S59208118 A
- EP 2410147 A2

**Non-patent literature cited in the description**

- *Bull. Chem. Soc. Jpn.,* 2004, vol. 77, 123